Europäisches Patentamt

European Patent Office

Office européen des brevets

(11) Veröffentlichungsnummer: **0 298 444**

**A2**

## (12) EUROPÄISCHE PATENTANMELDUNG

(21) Anmeldenummer: **88110780.9**

(51) Int. Cl.⁴: **G01B 11/00 , G01B 11/24**

(22) Anmeldetag: **06.07.88**

(30) Priorität: **06.07.87 HU 303387**

(43) Veröffentlichungstag der Anmeldung:
**11.01.89 Patentblatt 89/02**

(84) Benannte Vertragsstaaten:
**AT BE CH DE ES FR GB GR IT LI LU NL SE**

(71) Anmelder: **VERTIKUM MAGAS- és Mélyépitményjavito Kisszövetkezet Szeszgyar u. 4 Budapest(HU)**

(72) Erfinder: **Földi, Tivadar Irinyi J.u. 36/b Budapest(HU)**
Erfinder: **Bernat, Istvan Parisi u. 6/b Budapest(HU)**
Erfinder: **Vogronics, Laszlo Kutyavari u. 21 Erd(HU)**

(74) Vertreter: **Lehn, Werner, Dipl.-Ing. et al Hoffmann, Eitle & Partner Patentanwälte Arabellastrasse 4 D-8000 München 81(DE)**

(54) **Vorrichtung zur geometrischen Prüfung von kugelförmigen Körpern, insbesondere Stahlkugeln.**

(57) Die Erfindung bezieht sich auf eine Vorrichtung zur geometrischen Prüfung von kugelförmigen Körpern, insbesondere Stahlkugeln vorteilhaft mit einer Laser-Quelle, einem halbdurchlassenden Spiegel, einem Rastergitter, einem voll reflecktierenden Spiegel, einem Linsensystem, einer Lichtquelle und einem Abbildungsschirm.

Das Wesen der Erfindung besteht darin, dass in der unmittelbaren Umgebung, vorteilhaft oberhalb des die zu messende Kugel (8) ragenden Nestes (16) ein konvex-konkaves Linsensystem (3) angeordnet ist, in dessen optischer Achse (I) in halbdurchlassender Spiegel (2) in einem Winkel von 45° steht, und entlang derselben optischen Achse (I) mit der Zwischenschaltung einer Kompensationslinse (Zoom) (4) ein Schirm (5) angeordnet ist, weiterhin dass die die erwähnte optische Achse in der Ebene des halbdurchlassenden Spiegels (8) schneidende weitere optische Achse (II) von einer Lichtquelle (10) durch ein Rastergitter (1) biz zum erwähnten halbdurchlassenden Spiegel ragt.

Fig. 1

# VORRICHTUNG ZUR GEOMETRISCHEN PRÜFUNG VON KUGELFÖRMIGEN KÖRPERN, INSBESONDERE STAHLKUGELN

Die Erfindung bezieht sich auf eine Vorrichtung zur geometrischen Prüfung von kugelförmigen Körpern, insbesondere Stahlkugeln.

Est ist bekannt, dass durch die an Kugellagern gestellten und je mehr erhöhten Qualitätsanforderungen erforderlich ist, dass die verwendeten Kugel ausnahmslos eine theoretische Kugelform annähern, also ihr aus jedwelcher Lage gemessener Durchmesser wie auch ihre oberflächliche Glattheit sollen sich daran anpassen. Im gegebenen Lager verursacht eine einzige Kugel abweichender Geometrie einen vorzeitigen Verschleiss, deshalb erfordern die oben erwähnten Umstände eine sehr strenge und exakte Prüfung der ganzen Kugelmasse.

Von den heute bekannten Methoden der Prüfung von Kugeln ist für die meistpräzise Methode diejenige gehalten, bei der die zu messende Kugel auf drei Stück, sich in einem Nest befindende Etalonkugel angeordnet ist und während diese Kugel mit einer dazu geführten Diamantnadel berührt ist, der Abstand zwischen dem Punkt der entsprechenden Etalonkugel und der Diamantnadel - der dem Durchmesser der zu messenden Kugel entspricht - auf dem Prinzip der Induktivität gemessen ist und die Kugel mit ausserhalb der Toleranz fallendem Radius bzw. Durchmesser gesondert werden.

Diese Lösung hat den Nachteil, dass im wesentlichen nur eine Längenabmessung (Durchmesser bzw. Radius) das Ergebnis der Messung ist, die zwischen zwei ausgezeichneten Punkten der gegebenen Kugel gültig ist, zugleich ist es vorstellbar, dass eine Messung zwischen zwei anderen "ausgezeichneten" Punkten ein unterschiedliches Ergebnis gäbe. Eine derartige Messung nimmt also die eventuelle sphärische Abweichung nicht oder nur in geringem Prozentsatz wahr, so besteht die Gefahr, dass auch ermässigt ellipsoidförmige oder andere deformierte Kugel als exakte Kugel zur Bewertung kommen.

Weitere Nachteile dieser Lösung bestehen darin, dass man einerseits über die oberflächliche Glattheit der Kugel keine Information erhält, andererseits, dass der mit den zu messenden Kugeln in mechanischer Verbindung stehende Diamant nach Messungen gegebener Anzahl ausge tauscht werden soll, was mit bedeutenden technischwirtschaftlichen Aufwänden verbunden ist.

Schliesslich soll derjenige Nachteil erwähnt werden, dass derartige Messungen vielmehr auf laboratorischem Niveau ermöglicht sind, als in der Bertriebstechnologie.

Zielsetzung der Erfindung ist, eine Vorrichtung zur geometrischen Prüfung von kugelförmigen Körpern, insbesondere Stahlkugeln zu entwickeln, die über die oben aufgezählten Mangelhaftigkeiten nicht verfügt, und die eine gleichzeitige exakte Messung von mehreren Parametern ermöglicht, die obigen Messergebnisse ohne mechanische Verbindung mit der zu messenden Kugel erzeugt, und insbesondere die Messung der sphärischen Abweichung weiterhin der sog. Kantigkeit verwirklicht.

Im Sinne der Erfindung wird die Zielsetzung mit einer Vorrichtung erfüllt, die dadurch gekennzeichnet werden kann, dass in der Umgebung, zweckmässig oberhalb eines die zu messende Kugel tragenden Nestes ein konvex-konkaves Linsensystem angeordnet ist, in dessen optischer Achse ein halbdurchlassender Spiegel in einem Winkel von 45° steht, und entlang derselben optischen Achse mit der Zwischenschaltung einer Kompensationslinse ein Schirm angeordnet ist. weiterhin dass eine die erwähnte optische Achse in der Ebene des halbdurchlassenden Spiegels senkrecht schneidende andere optische Achse einer Lichtquelle durch einen Kartauser-Gitter bis zum erwähnten halbdurchlassenden Spiegel ragt.

Das die zu messende Kugel tragende Nest ist vorteilhaft in einem optischen System angeordnet, das an einem, einer Laser-Quelle zugeordneten derartigen halbdurchlassenden Spiegel angepasst ist, in dessen Ebene die die erwähnte Laser-Quelle und die zu messende Kugel mit der Zwischenschaltung eines Linsensystems verbindende Gerade, weiterhin die den halbdurchlassenden Spiegel mit einem voll zurückstrahlenden Spiegel verbindende weitere Gerade einander schneiden, wobei der voll zurückstrahlende Spiegel und die Kugel mit einem Abbildungsschirm in optischer Verbindung stehen.

Der Abbildungsschirm ist zweckmässig an einem mit Computer verbundenen Signalumformereinrichtung angeschlossen.

Zweckmässig ist weiterhin, dass die erfindungsgemässe Vorrichtung mit einem Kugelzuführ-, Kugelförderer- und Kugelselektiergerätz zusammengebaut ist.

Die Erfindung beruht sich auf der Erkenntnis, dass eine zu messende, praktisch glatte, also über Spiegelfläche verfügende Kugel als ein im optischen, bzw. damit quasi gleichem System einbaubares Mittel verwendet werden kann und die darauf projektierten und dadurch zurückgestrahlten Formationen exakte Informationen über die Sphärizität, weiterhin oberflächliche Glattheit der gegebenen Kugel geben können.

Die erfindungsgemässe technische Lösung wird nachstehend anhand vorteilhafter Ausführungsformen, mit Hilfe der beiliegenden Zwichnungen näher erläutert. Es zeigen

Fig. 1 - die mit Lichtstrahlen funktionierende Vorrichtung,

Fig. 2 - die mit Laserstrahlen betreibene Vorrichtung schematisch, aus didaktischem Gesichtspunkt in teilweise ausgelegter Form.

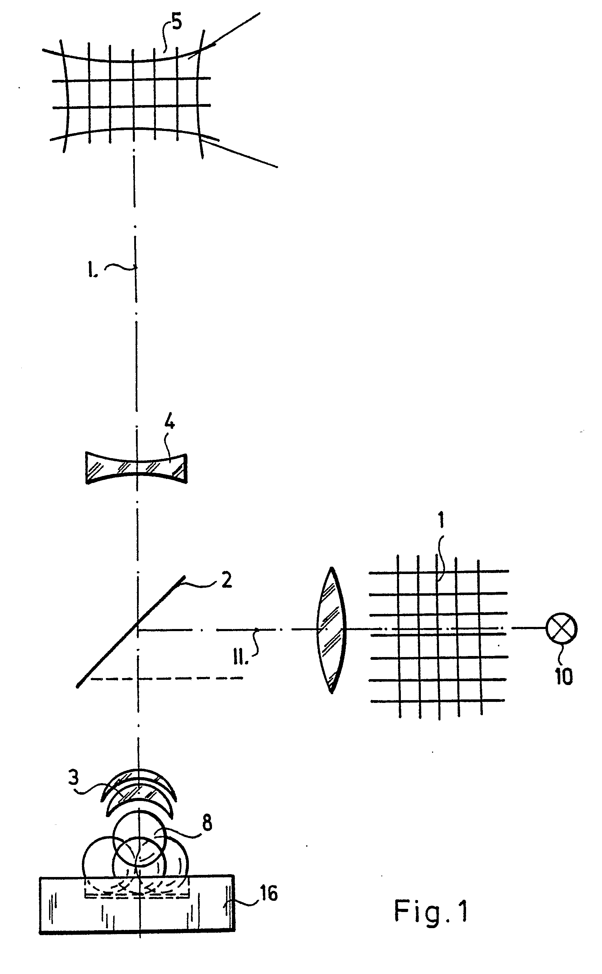

Aus Fig. 1 ersichtlich ist oberhalb der unterstützten Kugel 8 ein Linsensystem 3 ausgebildet, welches auf die Kugelfläche ein scharfes Bild gibt. Daran ist ein halbdurchlassender Spiegel 2 angeschlossen, der einerseits mit einem Rastergitter 1, der durch eine Lichtquelle 10 beleuchtet ist, in Verbindung steht, andererseits steht im Weg des erwähnten halbdurchlassenden Spiegels eine Kondensorlinse 4.

In der optischen Achse der Kompensationslinse 4 (Zoom) ist ein Schirm 5 angeordnet. Die Lichtquelle 10 projektiert das Bild des Rastergitters 1 mit der Zwischenschaltung des halbdurchlassenden Spiegels 2 auf die zu messende Kugel 8, und von dort gelangt das Bild auf den Schirm 5.

Das am Schirm 5 erscheinende Bild reflektiert vom grossen Teil der Oberfläche der Kugel 8.

Wir haben gefunden, dass in der Abbildung selbst derartige charkteristische Formationen inkorporiert sind, aus welchen auf die Sphärizität der geprüften Kugel 8 gefolgt werden kann. Wenn nämlich das sphärisch aberrierte Bild kissenartig bzw. fassartig deformiert ist, bedeutet das eine + oder - Abweichung vom idealen Durchmesser, die auf an sich bekannte Weise kalibriert über die Streuung des Durchmessers der Kugel 8 Information gibt.

Weitere Informationen können aus dem am Schirm 5 abgebildeten Bild über die Bearbeitungsgenauigkeit (Glattheit) der Oberfläche der Kugel 8 durch die Veränderung der Liniendicke und des Zugs des am Schirm 5 abgebildeten Rastergitters 1 gewonnen werden. Durch dessen Tranformation auf dem Prinzip der Gauss-Kurve kann man zuverlässige Informationen erhalten.

Mit Rücksicht darauf, dass die Messung der Kugeln 8 in einer technologischen Reihe erfolgt, ist es zweckmässig, das über die gegebene Kugel erhaltene Bild mit einem Computer zu bearbeiten, und die Zertrennung der entsprechenden und nicht entsprchenden Kugel voneinander ebenfalls durch Computer zu steuern.

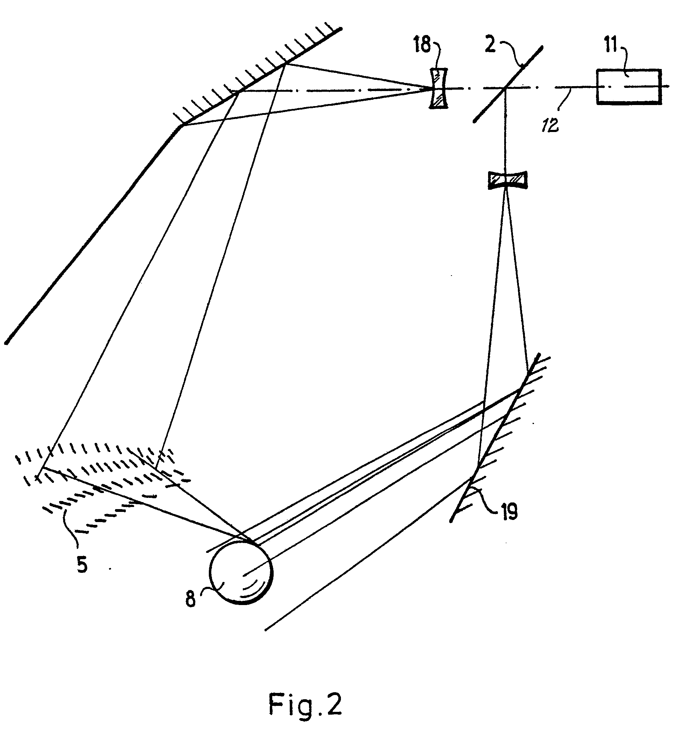

In Fig. 2 ist diejenige Variante der erfindungsgemässen technischen Lösung dargestellt, wo anstatt eines Lichtstrahlbündels Laserstrahlen verwendet werden. In diesem Fall wird aus einer Laserstrahlquelle 11 ein Strahl 12 durch den bereits bekannten haldurchlassenden Spiegel 2 mit der Zwischenschaltung des Linsensystems 18 auf die Kugel 8 geführt. Aus dem halbdurchlassenden Spiegel 2 gelangt der in einem Winkel von 90° gebrochene Laserstrahl mit der Zwischenschaltung eines voll reflektierenden Spiegels 19 auf den Abbildungsschirm 5, auf welchen der aus der Quelle 11 unmittelbar auf die Kugel 8 gelangende Laserstrahl ebenfalls Formationen projektiert.

Die aufeinander projektierten zwei Formationen werden aufeinander superponiert oder einander schwächen bzw. auslöschen. Dessen Mass wird im Fourierschen transformierten Bereich verglichen.

Jedwelche Ausführungsform der erfindungsgemässen Vorrichtung kann auf an sich bekannte Weise an Computer angeschlossen, weiterhin mit Zuführ- und Klassifiziersystem versehen werden.

## Ansprüche

1. Vorrichtung zur geometrischen Prüfung von kugelförmigen Körpern, insbesondere Stahlkugeln mit einem halbdurchlassenden Spiegel, einem Rastergitter, einem Linsensystem, einer Lichtquelle und einem Abbildungsschirm, **dadurch gekennzeichnet,** dass in der unmittelbaren Umgebung, zweckmässig oberhalb eines die zu messende Kugel (8) tragenden Nestes (16) ein konvex-konkaves Linsensystem (3) angeordnet ist, in dessen optischer Achse (I) ein halbdurchlassender Spiegel (2) in einem Winkel von 45° steht, und entlang derselben optischen Achse (I) mit der Zwischenschaltung einer Kompensationslinse (4) (Zoom) ein Schirm (5) angeordnet ist, weiterhin dass die erwähnte optische Achse in der Ebene des halbdurchlassenden Spiegels (8) senkrecht schneidende weitere optische Achse (II) von der Lichtquelle (10) durch ein Rastergitter (1) zum erwähnten halbdurchlassenden Spiegel ragt.

2. Vorrichtung zur geometrischen Prüfung von kugelförmigen Körper, insbesondere Stahlkugeln mit Laser-Quelle, halbdurchlassendem Spiegel, voll reflecktierendem Spiegel, Linsensystem und Abbildungsschirm, **dadurch gekennzeichnet,** dass das die zu messende Kugel tragende Nest in einem derartigen optischen System angeordnet ist, welches an einen der Laser- Quelle (11) zugeordneten derartigen halbdurchlassenden Spiegel (2) angepasst ist, in dessen Ebene die die erwähnte Lichtquelle und die zu messende Kugel (8) mit der Zwischenschaltung des Linsensystems (18) verbindende Gerade, weiterhin die den halbdurchlassenden Spiegel (2) mit einem voll reflektierenden Spiegel (19) verbindende weitere Gerade einander schneiden, wobei der voll reflektierende Spiegel (19) weiterhin die Kugel (8) mit einem Abbildungsschirm (5) in optischer Verbindung stehen.

3. Vorrichtung nach Anspruch 1 oder 2, **dadurch gekennzeichnet,** dass der Abbildungsschirm (5) an einer mit Computer (17) verbundenen Signalumformereinrichtung (18) angeschlossen ist.

4. Vorrichtung nach einem der Ansprüche 1 bis 3, **dadurch gekennzeichnet,** dass sie mit einem Kugelzuführ-, Kugelförderer- und Kugelselektiergerät zusammengebaut ist.

Fig.1

Fig.2